# EUROPÄISCHE PATENTSCHRIFT

(11) **EP 3 402 641 B1**
(45) Veröffentlichungstag und Bekanntmachung des Hinweises auf die Patenterteilung: **07.06.2023**
(21) Anmeldenummer: 17700401.7
(22) Anmeldetag: 11.01.2017
(51) Int. Cl.: B28C 5/46, B28C 7/16, B28B 1/14, B28B 13/02, B28C 5/12, B28C 5/16, C04B 40/00, B01F 33/70

(54) **VORRICHTUNG UND VERFAHREN ZUM BEHANDELN VON FRISCHBETON**
DEVICE AND METHOD FOR TREATING FRESH CONCRETE
DISPOSITIF ET PROCÉDÉ DE TRAITEMENT DE BÉTON FRAIS

(30) Priorität: 11.01.2016 DE 202016000089 U
(43) Veröffentlichungstag der Anmeldung: 21.11.2018
(73) Patentinhaber: Winkler, Harald, 27389 Helvesiek (DE)
(72) Erfinder: Winkler, Harald, 27389 Helvesiek (DE)
(74) Vertreter: Eisenführ Speiser
(86) Internationale Anmeldenummer: PCT/EP2017/050433
(87) Internationale Veröffentlichungsnummer: WO 2017/121737

(56) Entgegenhaltungen:
- FR-A- 1 398 015
- JP-A- S6 369 604
- JP-A- 2005 161 724
- JP-B2- 2 847 009

## Beschreibung

Die Erfindung betrifft eine Vorrichtung zum Behandeln von Frischbeton vor dessen Verarbeitung. Des Weiteren betrifft die Erfindung eine Betonverarbeitungs-Anlage für Frischbeton mit einem Fülltrichter für den darin hineinzugebenden Frischbeton und einer Verarbeitungsmaschine für den Frischbeton. Des Weiteren bezieht sich die Erfindung auch auf ein Verfahren zum Behandeln von Frischbeton.

Es ist zum Beispiel aus dem Stand der Technik bekannt, den Frischbeton für die Herstellung von Betonfertigteilen in Formen einzugeben, in denen der Beton zumindest abbindet. Anschließend wird das gefertigte Betonteil aus der Form entnommen ohne eine Formänderung dessen zu erzeugen und bis zum vollständigen Aushärten gelagert. Während der Verarbeitung des Frischbetons, also während des Einfüllens des Frischbetons in die Form, wird die Form mithilfe einer Verdichtungsvorrichtung in Schwingungen versetzt, wodurch das vollständige Befüllen der Form sichergestellt werden soll.

Des Weiteren wird häufig nach dem Befüllen die Form weiterhin mit einer vorbestimmten Frequenz für eine vorbestimmte Zeitdauer hin- und herbewegt, um eventuell im Frischbeton bzw. Betongemisch enthaltene Lufteinschlüsse nach außen bzw. an die Oberfläche der in der Form befindlichen Betonmasse zu bewegen. Derartige Verdichtungsvorrichtungen werden vorrangig zur Herstellung von Stückwaren verwendet. Bei der Herstellung von Betonfertigteilen mit derartigen Verdichtungsvorrichtungen ergibt sich jedoch der Nachteil, dass kleinere Lufteinschlüsse während des Verdichtens nicht zuverlässig herausgelöst werden. Eine zu lange Rütteldauer kann hingegen zu einer Entmischung des Betongemisches mit einer wässrigen Zementschlemme an der Oberfläche führen, wodurch die Dauerhaftigkeit des Betons herabgesetzt wird.

Eine alternative Möglichkeit, welche insbesondere im Bereich des Straßenbaus eingesetzt wird, ist die Zugabe von chemischen Zusatzstoffen, sogenannten Entlüftungsadditiven, mithilfe denen das Verschmelzen mehrerer kleiner Luftblasen zu großen Luftblasen begünstigt wird, welche dann leichter an die Oberfläche aufsteigen können. Mit dem Hinzugeben von solchen Entlüftungsadditiven ist ein wirkungsvolles, im Vergleich zur Entlüftung mit Verdichtungsvorrichtungen jedoch relativ kostenintensives Verfahren zur Behandlung von Frischbeton verwirklicht.

Weiter ist aus JPS 63-69604 A eine Vorrichtung bekannt, die einen Behälter aufweist, in den Frischbeton eingebracht wird, wobei der Behälter mit einer Vakuumpumpe mit einem Unterdruck beaufschlagt wird, um Lufteinschlüsse aus dem Frischbeton zu entfernen. JPS 63-69604 A offenbart eine Vorrichtung bzw. ein Verfahren zum Behandeln von Frischbeton nach dem Oberbegriff des Anspruchs 1 bzw. des Anspruchs 11.

Der Erfindung lag daher die Aufgabe zugrunde, eine Vorrichtung und ein Verfahren zum Behandeln von Frischbeton aufzuzeigen, mit denen das Entlüften des Frischbetons auf zuverlässige und einfache Weise möglich ist.

Die Erfindung löst die ihr zugrundeliegende Aufgabe bei einer Vorrichtung zum Behandeln eines mineralischen Gemisches, insbesondere von Frischbeton, vor dessen Verarbeitung durch einen Aufnahmebehälter für den Frischbeton mit einem Behältereinlass und einem Behälterauslass, wenigstens eine mit dem Behälter fluidleitend verbundene Vakuumiereinheit zum Erzeugen eines unterhalb des atmosphärischen Umgebungsdruckes liegenden Innendruckes in zumindest einer Vakuumzone des Behälters und mindestens eine in der oder angrenzend an die Vakuumzone des Behälters angeordnete Verteileinrichtung für den zu behandelnden Frischbeton.

Der Erfindung liegt die Erkenntnis zugrunde, dass innerhalb eines den Frischbeton aufnehmenden Aufnahmebehälters, dessen Behältereinlass und Behälterauslass zumindest zeitweise abdichtend verschlossen werden kann, mittels einer Vakuumiereinheit, welche fluidleitend am Behälter angeschlossen ist, im Behälter ein im Vergleich zum atmosphärischen Umgebungsdruck deutlich verringerter Minderdruck erzeugt werden kann, durch den Lufteinschlüsse im Frischbeton im Inneren des Behälters auf einfache Weise herausgelöst werden. Zudem ist im Behälter eine Verteileinrichtung in der oder angrenzend an die Vakuumzone des Behälters vorgesehen. Bevorzugt wird die Oberfläche des in der Vakuumzone befindlichen Frischbetons insoweit vergrößert bzw. Teilmengen des Frischbetons in Richtung der Oberfläche des Frischbetons im Aufnahmebehälter bewegt, dass der Unterdruck gezielt auf den Frischbeton einwirken kann. Dadurch wird das Herauslösen der Lufteinschlüsse im Frischbeton unterstützt bzw. verstärkt. Über den Behältereinlass wird der Frischbeton chargenweise oder kontinuierlich eingegeben und über den Behälterauslass wird der sogenannte Vakuumbeton nach seiner Behandlung chargenweise oder kontinuierlich ausgegeben. Unter einem im Behälter erzeugten Vakuum ist vorliegend ein Minderdruck im Behälter zu verstehen, der einem Absolutdruck im Behälter im Bereich von etwa 0,2 bis 0,7 bar, bevorzugt in einem Bereich von etwa 0,3 bis 0,55 bar, entspricht.

In einer bevorzugten Weiterbildung der Erfindung ist eine mit dem Behältereinlass medienleitend verbundene erste Fördereinrichtung und eine mit dem Behälterauslass medienleitend verbundene zweite Fördereinrichtung vorgesehen. Mittels der ersten Fördereinrichtung und der zweiten Fördereinrichtung wird der Frischbeton bzw. der nach der Behandlung vorliegende Vakuumbeton vorzugsweise kontinuierlich in den Aufnahmebehälter hinein oder am Auslass des Aufnahmebehälters kontinuierlich abgeführt. Die erste und zweite Fördereinrichtung ermöglichen eine massenstromgesteuerte Zu- und Abfuhr von Frischbeton zum Aufnahmebehälter bzw. von Vakuumbeton vom Aufnahmebehälter. Insbesondere ist die erste Fördereinrichtung mit dem Einlass des Aufnahmebehälters und die zweite Fördereinrichtung mit dem Auslass des Aufnahmebehälters druckdicht bzw. fluiddicht verbunden, wodurch gewährleistet ist, dass der erzeugte Unterdruck im Aufnahmebehälter sicher aufrecht erhalten wird.

Vorzugsweise ist die erste Fördereinrichtung einlassseitig mit einem Betonbehälter für den Frischbeton, vorzugsweise einem Frischbetonbunker, oder einem Fülltrichter einer Betonverarbeitungs-Anlage medienleitend koppelbar. Einlassseitig ist die erste Fördereinrichtung bevorzugt mit einem als Zwischenspeicher ausgebildeten Betonbehälter koppelbar. Dieser weist ein ausreichend großes Speichervolumen für eine kontinuierliche Abgabe des Frischbetons über eine vorbestimmte Zeitdauer auf. Der Betonbehälter kann in Abständen befüllt werden. Vorzugsweise weist der Betonbehälter wenigstens einen Füllstandssensor auf, der einen Minderfüllstand im Betonbehälter erfasst und bei Detektieren des Minderfüllstands ein Signal an eine Steuereinrichtung abgibt, welche bevorzugt die Vorrichtung zum Behandeln stoppt. Damit wird ein Leerfahren des Betonbehälters verhindert. Die erste Fördereinrichtung weist vorzugsweise vertikal und/oder horizontal ausgerichtete Förderstrecken auf.

In einer Ausgestaltung der erfindungsgemäßen Vorrichtung weist die zweite Fördereinrichtung einen bevorzugt horizontal oder vertikal angeordneten Auslassbereich auf, vorzugsweise eine vertikal verlaufende Abführleitung. Zur Abgabe des erzeugten Vakuumbetons ist die zweite Fördereinrichtung in einer Ausführungsform der Erfindung auslassseitig mit beispielsweise einer vertikal verlaufenden Abführleitung verbunden. Der über die vertikale Abführleitung ausgegebene Vakuumbeton wird vorzugsweise in eine Form für ein herzustellendes Fertigbetonteil eingegeben. Ein horizontaler Auslassbereich ist insbesondere vorgesehen, wenn die Vorrichtung dazu eingerichtet ist, auslassseitig mit einem Straßenfertiger gekoppelt zu werden. Die zweite Fördereinrichtung weist eine im Wesentlichen waagerechte Förderstrecke auf, wobei die Neigung der Förderstrecke bevorzugt in einem Winkelbereich von etwa +/- 30 Grad zur Waagerechten verstellbar ist.

In einer bevorzugten Ausführungsform der Erfindung weist die erste und zweite Fördereinrichtung einen oder mehrere Schneckenförderer zum Fördern des Frischbetons auf. Mithilfe eines Schneckenförderers ist eine kontrollierte Zufuhr des Frischbetons zur Vorrichtung und eine kontrollierte Abfuhr des Vakuumbetons von der Vorrichtung möglich. Zudem hat die Verwendung von Förderschnecken den Vorteil, dass mit diesen im Übergang zum Einlass des Aufnahmebehälters und vom Auslass des Aufnahmebehälters eine selbstabdichtende Wirkung beim Fördern des Frischbetons oder Vakuumbetons erreicht wird. Dadurch lässt sich der Unterdruck im Aufnahmebehälter ohne aufwändige zusätzliche Abdichtungseinrichtungen entlang der Förderstrecke des Frischbetons bzw. Vakuumbetons gewährleisten. Insbesondere weisen die Förderschnecken von erster und zweiter Fördereinrichtung entlang ihrer Förderrichtung Abschnitte mit unterschiedlichen Steigungen entlang der Förderrichtung auf. Vorzugsweise weisen die Endabschnitte von erster und zweiter Fördereinrichtung geringere Steigungen auf, wodurch an der ersten Fördereinrichtung vor dem Einlass des Aufnahmebehälters eine Vorverdichtung des Frischbetons erfolgt. An der zweiten Fördereinrichtung hat die verringerte Steigung auslassseitig eine bremsende Wirkung, wodurch die gezielte Abgabe des erzeugten Vakuumbetons verbessert ist. In einer bevorzugten alternativen Ausführungsform werden als erste und zweite Fördereinrichtung Betonpumpen verwendet, wie beispielsweise Kolben- oder Rotorpumpen.

In einer anderen Weiterbildung der Erfindung weist der Aufnahmebehälter eine senkrechte Längsachse und eine vorzugsweise zylindrische Außenwand auf, wobei innerhalb des Behälters übereinander eine Vakuumzone und eine Abführzone für den im Aufnahmebehälter zu behandelnden Frischbeton vorgesehen sind. Der Auslass am Aufnahmebehälter ist aufgrund der wirkenden Schwerkraft vorzugsweise am unteren Ende des Aufnahmebehälters vorgesehen. Der Aufnahmebehälter weist einen zylindrischen Abschnitt und einen darunter angeordneten kegelförmigen bzw. trichterförmigen Abschnitt auf. Am unteren Ende des trichterförmigen Abschnitts ist der Behälterauslass angeordnet und damit der Übergang zur zweiten Fördereinrichtung vorgesehen. Vorzugsweise erstreckt sich die Abführzone über etwa die Höhe des trichterförmigen Behälterabschnitts. In der darüber ausgebildeten Vakuumzone erfolgt das Herauslösen der Lufteinschlüsse aus den in den Aufnahmebehälter eingegebenen Frischbeton. Die Vakuumzone ist insbesondere im zylindrischen Abschnitt des Behälters ausgebildet, an dem auch der Behältereinlass angeordnet ist.

In einer Ausführungsform der Erfindung erstreckt sich die erste Fördereinrichtung oder eine zusätzliche Fördereinrichtung mit einem Abschnitt bis in den Aufnahmebehälter hinein. Darüber ist die gleichmäßige Verteilung bei Einbringen des Frischbetons in den Aufnahmebehälter gewährleistet, wodurch der Unterdruck in der Vakuumzone gezielt auf den eingegebenen Frischbeton wirken kann. Bei einer Umwälzeinrichtung ist eine zumindest sich in den Aufnahmebehälter hinein erstreckende Fördereinrichtung vorgesehen, welche bevorzugt Paddel aufweist, mit denen Teilmengen des Frischbetons zum Herauslösen der Lufteinschlüsse in Richtung der Oberfläche des Frischbetons im Aufnahmebehälter bewegt werden. Die Umwälzeinrichtung umfasst in einer Ausführungsform eine sich vom Einlass bis zum Auslass des Aufnahmebehälters erstreckende Fördereinrichtung.

Gemäß der Erfindung umfasst die Verteileinrichtung einen Ausbreitteller für den in den Aufnahmebehälter eingeleiteten Frischbeton, wobei der Ausbreitteller vorzugsweise drehbar im Aufnahmebehälter ist. Der in den Aufnahmebehälter eingeleitete Frischbeton wird bevorzugt gleichmäßig auf dem Ausbreitteller der Vorrichtung verteilt, wodurch erreicht wird, dass der Frischbeton, bezogen auf ein bestimmtes Volumenmaß, eine vergleichsweise große Oberfläche hat, an der das im Aufnahmebehälter erzeugte Vakuum einwirken kann. Lufteinschlüsse im Frischbeton werden darüber gezielt herausgelöst. Durch die drehbare Anordnung bzw. Aufnahme des Ausbreittellers im Aufnahmebehälter erfolgt eine bevorzugt gleichmäßige Beaufschlagung des Ausbreittellers über den sich in den Aufnahmebehälter erstreckenden Abschnitt der ersten Fördereinrichtung. In einer alternativen Ausgestaltung ist zusätzlich zur ersten und zweiten Fördereinrichtung eine weitere, dritte Fördereinrichtung vorgesehen, welche den in den Aufnahmebehälter eingeleiteten Frischbetons verteilt an dem Ausbreitteller abgibt.

Erfindungsgemäß ist dem drehbaren Ausbreitteller ein Abstreifer zugeordnet, welcher dazu eingerichtet ist, bevorzugt kontinuierlich eine Teilmenge des auf dem Ausbreitteller befindlichen, teilweise von Lufteinschlüssen befreiten, Vakuumbetons in die Abführzone abzuführen. Der Abstreifer ist dabei derart oberhalb des Abstreiftellers angeordnet, dass der abzuführende von Lufteinschlüssen zumindest teilweise befreite Vakuumbeton über den Rand des Ausbreittellers geschoben wird. Aufgrund der wirkenden Schwerkraft fällt der Vakuumbeton auf den sich bereits in der Abführzone des Aufnahmebehälters befindlichen Vakuumbeton. Der Abstreifer ist vorzugsweise feststehend zu dem sich darunter hinweg bewegenden Ausbreitteller angeordnet. Der Ausbreitteller ist dazu eingerichtet, etwa 5 bis 10 Umdrehungen pro Minute auszuführen. Der Ausbreitteller weist einen Außendurchmesser auf, der etwa 5 bis 10 cm kleiner ist als der Innendurchmesser des Aufnahmebehälters.

Bevorzugt weist die Vakuumiereinheit wenigstens eine Vakuumpumpe auf, mittels der Unterdruck in der Vakuumzone erzeugt wird. Die Vakuumpumpe ist insbesondere dazu eingerichtet, einen Absolutdruck in der Vakuumzone von etwa 0,2 bis 0,7 bar, bevorzugt von etwa 0,3 bis 0,55 bar, zu erzeugen. Die Vakuumpumpe ist bevorzugt an der Oberseite des Aufnahmebehälters fluidleitend mit dem Aufnahmebehälter gekoppelt.

In einer anderen Weiterbildung der Erfindung ist innerhalb des Aufnahmebehälters eine Mischeinrichtung angeordnet, die dazu eingerichtet ist, den in der Abführzone befindlichen Vakuumbeton gleichmäßig umzuwälzen. Damit soll einer Entmischung des im Aufnahmebehälter befindlichen Vakuumbetons entgegengewirkt werden.

Vorzugsweise weist die Mischeinrichtung ein Rührwerk mit vorzugsweise einer koaxial zur Längsachse des Behälters verlaufenden Rotationsachse auf. Durch die koaxiale Anordnung des Rührwerks im Aufnahmebehälter ist eine gleichmäßige Durchmischung des in der Abführzone befindlichen Vakuumbetons möglich. Vorzugsweise sind die Mischeinrichtung und die Verteilereinrichtung antriebsmäßig miteinander gekoppelt, wodurch zum Antreiben der Umwälzeinrichtung eine einzige Antriebseinheit, wie beispielsweise ein Elektromotor, genügt. Bevorzugt sind der Abstreifteller und das Rührwerk an einem gemeinsamen Antriebsstab angeordnet, welcher koaxial zur Behälterlängsachse verläuft.

In einer bevorzugten Ausführungsform der Erfindung weist das Rührwerk mehrere Rührarme, welche vorzugsweise unter einem Winkel geneigt zur Rotationsachse verlaufen, und/oder einen Spiralmischer mit einer oder mehreren Mischwendeln auf. Mithilfe der geneigt an der Antriebswelle des Rührwerkes angeordneten Rührarmen wird bevorzugt eine Aufwärtsbewegung des Vakuumbetons entgegen der Schwerkraft erzeugt. Insbesondere innerhalb des Vakuumbetons noch enthaltene Lufteinschlüsse sollen darüber gezielt an die Oberfläche des Vakuumbetons an der Abführzone abgeleitet werden. Alternativ oder optional ist anstelle oder neben den Rührarmen wenigstens ein Spiralmischer mit wenigstens einer Mischwendel vorgesehen. Die Mischwendel verläuft vorzugsweise spiralförmig um den Antriebsstab des Rührwerkes herum. Dabei ist die Steigung bzw. der Verlauf der Mischwendel um den Antriebsstab und die Drehrichtung des Antriebsstabes derart aufeinander abgestimmt, dass auch mit dem Spiralmischer eine Mischbewegung entgegen der Schwerkraft erzeugt wird.

Die Erfindung betrifft gemäß einem weiteren Aspekt eine Betonverarbeitungs-Anlage für Frischbeton mit einem Fülltrichter für den darin einzugebenden Frischbeton und eine Verarbeitungsmaschine für den Frischbeton. Erfindungsgemäß ist wenigstens eine Vorrichtung gemäß einer der vorstehend bevorzugt beschriebenen Ausführungsformen vorgesehen. Die Vorrichtung ist vorzugsweise, bezogen auf die Förderrichtung des Frischbetons, zwischen dem Fülltrichter und der Verarbeitungsmaschine angeordnet.

Der Erfindung liegt die Erkenntnis zugrunde, dass mittels einer Vorrichtung zum Behandeln von Frischbeton eine Betonverarbeitungs-Anlage vorliegt, mittels der Produkte mit einem verringerten Anteil von Lufteinschlüssen im Material vereinfacht hergestellt werden kann. Zudem ist eine Qualitätsverbesserung und damit verbunden eine höhere Dauerhaftigkeit der aus dem Betonwerkstoff hergestellten Bauteile gewährleistet. Eine Betonverarbeitungs-Anlage, an der zum Beispiel eine solche erfindungsgemäße Behandlungsvorrichtung zwischen einem Behälter bzw. Fülltrichter für darin enthaltenen bzw. darin einzufüllenden Frischbeton und einer den dann erzeugten Vakuumbeton verarbeitenden Verarbeitungsmaschine eingesetzt wird, kann beispielsweise eine Ziegelformmaschine oder eine Steinplattenformmaschine sein.

Eine andere Ausführungsform einer erfindungsgemäßen Betonverarbeitungs-Anlage kann ein Beton-Straßenfertiger sein, mit dem bevorzugt in einem kontinuierlichen Verfahren der Betonwerkstoff zu einer Straßendecke ausgebildet wird. In Abhängigkeit von der Menge des zu erzeugenden Vakuumbetons können an einer solch erfindungsgemäßen Betonverarbeitungs-Anlage eine oder mehrere Vorrichtungen zum Behandeln von Frischbeton mit einer Vakuumiereinheit eingesetzt werden.

Unter dem Begriff "Aufnahmebehälter" ist vorliegend jegliche Art eines Aufnahmeraumes zu verstehen, durch den der Transport von Frischbeton von einem Einlass in Richtung eines Auslasses möglich ist. Dabei kann der Transport zwischen Einlass und Auslass in senkrechter Richtung oder auch in einer horizontalen Förderrichtung erfolgen. Zudem stellt die vorstehend beschriebene Behandlung von Frischbeton nur eine mögliche Verwendungsform der oben beschriebenen Behandlungsvorrichtung sowie der Betonverarbeitungs-Anlage dar. Grundsätzlich können verschiedenste mineralische Gemische bzw. Bauwerkstoffe, welche in ähnlicher Form wie Frischbeton verarbeitet werden, mittels der erfindungsgemäßen Behandlungsvorrichtung vor ihrer Verarbeitung von Lufteinschlüssen befreit werden. Die obige bevorzugt beschriebene Ausführungsform offenbart somit nur ein mögliches Anwendungsbeispiel.

Ein weiterer Aspekt der Erfindung betrifft ein Verfahren zum Behandeln von Frischbeton. Dem erfindungsgemäßen Verfahren liegt ebenfalls, wie vorstehend erläutert, die Aufgabe zugrunde, eine Möglichkeit anzugeben, ein mineralisches Gemisch, wie beispielsweise Frischbeton, auf einfache Weise von den darin enthaltenen Lufteinschlüssen zu befreien.

Das erfindungsgemäße Verfahren löst diese Aufgabe mit den Schritten: Eingeben von Frischbeton in einen Aufnahmebehälter; Erzeugen bzw. Aufrechterhalten eines unterhalb des atmosphärischen Umgebungsdruckes liegenden Innendruckes in mindestens einer Vakuumzone des Behälters; Verteilen des Frischbetons in der oder angrenzend an die Vakuumzone des Behälters, derart, dass die Oberfläche des Frischbetons vergrößert oder Teilmengen des Frischbetons in Richtung der Oberfläche des Frischbetons im Aufnahmebehälter bewegt werden; Überführen des wenigstens von Lufteinschlüssen teilweise befreiten Vakuumbetons in eine Abführzone des Behälters und Abführen des Vakuumbetons aus dem Behälter. Mithilfe der erfindungsgemäßen Verfahrensschritte ist das gezielte Herauslösen von Lufteinschlüssen aus dem Frischbeton, vor dessen Verarbeitung, auch ohne die Zugabe von Entlüftungsadditiven gewährleistet.

Mit dem Eingeben des Frischbetons in einen von der Umgebung bevorzugt abgedichteten Aufnahmebehälter ist es möglich, den eingegebenen Frischbeton einem Vakuum auszusetzen, wodurch die im Frischbeton befindlichen Lufteinschlüsse sich vergrößern und dadurch an die Oberfläche des Frischbetons getrieben werden. Um das Herauslösen der Lufteinschlüsse zu verbessern, ist es vorgesehen, den Frischbeton in der Vakuumzone zu verteilen. Das Verteilen erfolgt, um die Oberfläche des Frischbetons zu vergrößern oder Teilmengen in Richtung der Oberfläche des Frischbetons im Aufnahmebehälter zu bewegen. Anschließend wird der von Lufteinschlüssen weitestgehend befreite Vakuumbeton von der Vakuumzone in eine Abführzone des Behälters überführt, von der aus der Vakuumbeton dann abgeführt wird.

Gemäß einer bevorzugten Ausführungsform umfasst das erfindungsgemäße Verfahren zumindest einen, mehrere oder sämtliche der nachfolgend angeführten Schritte: Kontinuierliches Eingeben des Frischbetons in den Behälter mittels einer den Behältereinlass bevorzugt abdichtenden Fördereinrichtung; Verteilen des Frischbetons in der Vakuumzone unter Erzeugung einer vorbestimmten Schichtdicke auf einer Verteileinrichtung im Behälter und/oder fortwährendes Überführen von Teilmengen des teilweise von Lufteinschlüssen befreiten Vakuumbetons aus der Vakuumzone in eine Abführzone; Mischen des Vakuumbetons in der Abführzone des Aufnahmebehälters, vorzugsweise mittels eines Rührwerks; kontinuierliches Abführen des Vakuumbetons aus der Abführzone mittels einer als Dosiereinheit arbeitenden Fördereinrichtung am Behälterauslass. Mit den vorstehend angeführten Verfahrensschritten, einzeln oder in Kombination miteinander, kann das Verfahren zum Behandeln von Frischbeton beispielsweise als kontinuierlicher Behandlungsprozess für den zu verarbeitenden Frischbeton eingesetzt werden. Des Weiteren wird das Herauslösen der Lufteinschlüsse aus dem Frischbeton weiter verbessert.

Ein weiterer Aspekt der Erfindung bezieht sich auf ein Verfahren zum Herstellen eines aus Betonwerkstoff herzustellenden Gegenstandes, insbesondere eines Betonfertigteiles. Auch das erfindungsgemäße Herstellungsverfahren widmet sich der vorstehenden Problematik, den Anteil von Lufteinschlüssen bei der Herstellung eines Gegenstandes aus Betonwerkstoff zu reduzieren, wodurch dessen Dauerhaftigkeit erhöht wird.

Das erfindungsgemäße Verfahren löst diese Aufgabe mit den Schritten: Erzeugen oder Bereitstellen von Frischbeton; Behandeln des Frischbetons nach einem Verfahren gemäß den vorstehend bevorzugt beschriebenen Ausführungsformen eines Verfahrens zum Behandeln von Frischbeton und dem Erzeugen von Vakuumbeton; Einbringen des Vakuumbetons in eine Form, wobei der Vakuumbeton mittels einer Zuführleitung derart in das Formteil eingebracht wird, dass der Auslass der Zuführleitung während des Befüllens der Form unterhalb des Füllstands des Betons in der Form gehalten wird. Mit dem erfindungsgemäßen Herstellungsverfahren ist erreicht, dass beim Herstellen von insbesondere einem Betonfertigteil der erzeugte Vakuumbeton derart in die Form eingefüllt wird, dass der Einschluss von Luft in dem beispielsweise zu erzeugenden Betonfertigteil auf ein Minimum reduziert ist. Die Abführleitung zum Einbringen des Vakuumbetons in eine Form verläuft beispielsweise in vertikaler Richtung und ist in einer Ausführungsform der Erfindung einlassseitig mit der zweiten Fördereinrichtung der erfindungsgemäßen Behandlungsvorrichtung gekoppelt.

In einer alternativen Ausführungsform der Erfindung, bei der beispielsweise mittels eines Beton-Straßenfertigers eine Straßendecke aus Beton erzeugt wird, wird der Vakuumbeton über einen oder mehrere horizontal verlaufende Ausgabebereiche des Straßenfertigers ausgegeben.

Hinsichtlich bevorzugter weiterer Ausgestaltungen des erfindungsgemäßen Verfahrens zum Behandeln von Frischbeton und des Verfahrens zum Herstellen eines aus Betonwerkstoff herzustellenden Gegenstandes und der sich daraus ergebenden Vorteile wird auf die obigen Ausführungen zur erfindungsgemäßen Vorrichtung bzw. Betonverarbeitungs-Anlage verwiesen.
- Fig. 1: zeigt eine erste Ausführungsform einer Vorrichtung zum Behandeln von Frischbeton als Teil einer Betonverarbeitungs-Anlage, die nicht Teil der Erfindung ist,
- Fig. 2: eine schematische Darstellung einer zweiten Ausführungsform der erfindungsgemäßen Vorrichtung zum Behandeln als Teil einer Betonverarbeitungs-Anlage,
- Fig. 3: ein drittes Ausführungsbeispiel einer Vorrichtung zum Behandeln von Frischbeton, die nicht Teil der Erfindung ist, und
- Fig. 4: eine schematische Ansicht einer vierten Ausführungsform der Vorrichtung zum Behandeln von Frischbeton, die nicht Teil der Erfindung ist.

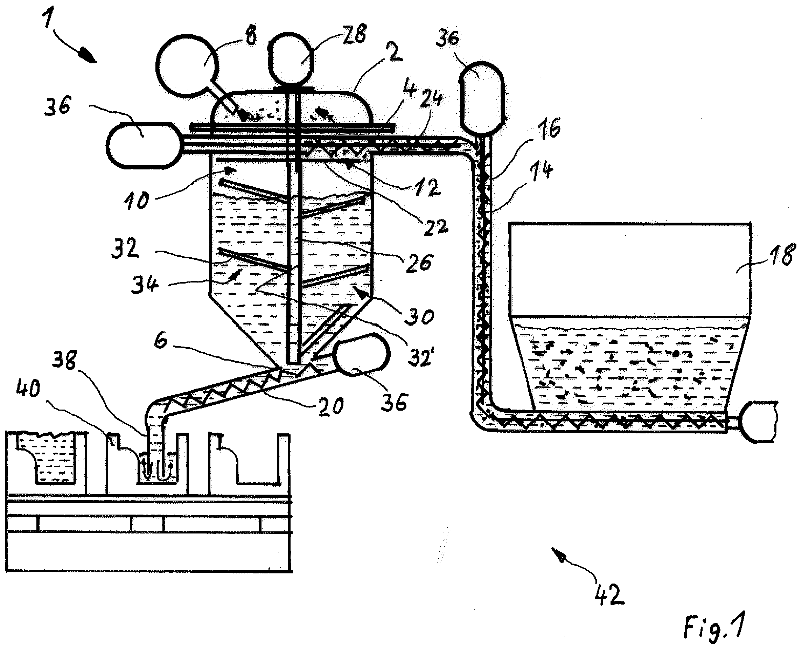

Fig. 1 zeigt eine Vorrichtung 1 zum Behandeln von Frischbeton vor dessen Verarbeitung, die nicht Teil der Erfindung ist, welche einen Aufnahmebehälter 2 mit einem Behältereinlass 4 und einem Behälterauslass 6 aufweist. An dem Aufnahmebehälter 2 ist eine Vakuumiereinheit 8 fluidleitend angeschlossen, mit der in wenigstens einer Vakuumzone 10 im Behälter 2 ein unterhalb des atmosphärischen Umgebungsdruckes liegenden Unterdruck im Behälter 2 erzeugt wird. Im Behälter 2 ist ferner eine Verteileinrichtung 12 angeordnet, mithilfe der der Frischbeton in der Vakuumzone 10 so verteilt wird, dass der Frischbeton, bezogen auf ein vorbestimmtes Volumenmaß, eine große Oberfläche hat.

Der Behältereinlass 4 ist mit einer ersten Fördereinrichtung 14 fluiddicht gekoppelt, welche in einer einlassseitigen Förderleitung 16 einen Massenstrom von einem Frischbetonbunker 18 in Richtung des Behältereinlasses 4 erzeugt. Am Behälterauslass 6 ist eine zweite Fördereinrichtung 20 angeordnet, mittels der der Vakuumbeton am Behälterauslass 6 gezielt abgeführt wird. Die zweite Fördereinrichtung 20 hat die Funktion einer Dosiereinheit.

Die innerhalb des Behälters 2 angeordnete Verteileinrichtung 12 weist einen Ausbreitteller 22 auf, der drehbar innerhalb des bevorzugt zylinderförmigen Aufnahmebehälters 2 angeordnet ist. Im Einlassbereich der in Fig. 1 gezeigten Ausführungsform der Vorrichtung ist eine weitere Fördereinrichtung 24 angeordnet, welche sich mit einem Abschnitt bis in den Innenraum des Aufnahmebehälters 2 oberhalb des Ausbreittellers 22 hinein erstreckt. Die Fördereinrichtung 24 verteilt den Frischbeton in radialer Richtung über den sich darunter drehenden Ausbreitteller 22. Mithilfe der am Aufnahmebehälter 2 angeschlossenen Vakuumpumpe als Vakuumiereinheit 8 wird ein Unterdruck erzeugt, der etwa einem Absolutdruck von 0,2 bis 0,7 bar, bevorzugt von etwa 0,3 bis 0,55 bar, entspricht. Der Ausbreitteller 22 ist an einem koaxial zur Längsachse des Aufnahmebehälters 2 angeordneten Antriebsstab 26 angeordnet, der drehfest mit einem an der Behälteroberseite angeordneten Antriebsmittel 28 gekoppelt ist. Am Antriebsstab 26 ist zudem ein Rührwerk 30 mit Rührarmen 32, 32' angeordnet, das dazu eingerichtet ist, eine Aufwärtsbewegung des zumindest teilweise entlüfteten Vakuumbetons entgegen der Schwerkraft zu erzeugen. Das Rührwerk 30 ist in einer Abführzone 34 des Behälters 2 angeordnet, in der sich der Behälter 2 trichterförmig in Richtung des Behälterauslasses 6 verjüngt.

Sämtliche der Fördereinrichtungen 14, 20, 24 sind als Schneckenförderer ausgebildet, welche eine oder mehrere miteinander in Eingriff stehende Förderschnecken aufweisen. Als Antrieb weisen die Fördereinrichtungen 14, 20, 24 als Elektromotor ausgebildete Antriebsmittel 36 auf. An der zweiten Fördereinrichtung 20 ist auslassseitig eine Abführleitung 38 angeordnet, welche bis an den Grund einer mit dem zu erzeugenden Vakuumbeton zu befüllenden Form 40 für ein zu erzeugendes Fertigbauteil erreicht. In einer Ausführungsform weist die zweite Fördereinrichtung eine im Wesentlichen waagerechte Förderstrecke auf, wobei die Neigung der Förderstrecke bevorzugt in einem Winkelbereich von etwa +/- 30 Grad zur Waagerechten verstellbar ist.

Die Vorrichtung zum Behandeln von Frischbeton ist vorliegend Teil einer Betonverarbeitungs-Anlage 42 für Frischbeton.

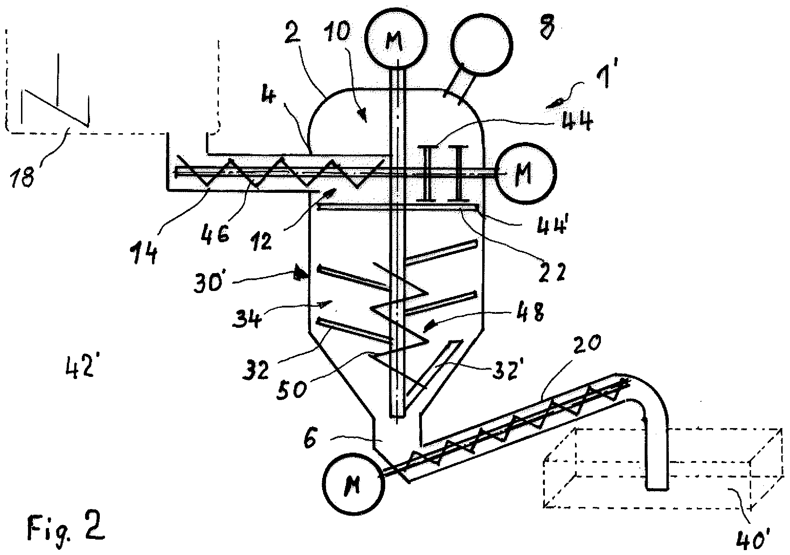

In Fig. 2 ist ein weiteres Ausführungsbeispiel einer Vorrichtung 1' gezeigt, welche Teil einer Betonverarbeitungs-Anlage 42' zum Herstellen von Betonfertigteilen ist. Die Vorrichtung 1' weist entgegen der in Fig. 1 gezeigten ersten Ausführungsform nur eine erste Fördereinrichtung 14 und eine zweite Fördereinrichtung 20 auf. Mit der ersten Fördereinrichtung 14 wird der Frischbeton aus dem Frischbetonbunker 18 über den Behältereinlass 4 bis auf die Verteileinrichtung 12 mit ihrem Ausbreitteller 22 gefördert. Die erste Fördereinrichtung 14 erstreckt sich in dieser Ausführungsform bis in den Aufnahmebehälter 2 hinein. Am Behälterauslass 6 ist die zweite Fördereinrichtung 20 druckdicht angeschlossen, wobei die zweite Fördereinrichtung 20 als Dosiereinheit für die zu befüllende Form 40' der Betonverarbeitungs-Anlage 42' dient.

Zum Verteilen des von Lufteinschlüssen zu befreienden Frischbetons weist die Verteileinrichtung 12 zusätzlich zu dem Ausbreitteller 22 mehrere relativ zum Ausbreittellers 22 bewegbar aufgenommen Paddel 44, 44' auf, welche mechanisch mit der drehbaren Schnecke 46 der ersten Fördereinrichtung 14 gekoppelt sind. Mithilfe der Paddel 44, 44' wird der Frischbeton auf dem Ausbreitteller 22 gleichmäßig verteilt und zudem eine vorbestimmte Teilmenge des zumindest teilweise von Lufteinschlüssen befreiten Vakuumbetons von der Vakuumzone 10 in die Abführzone 34 überführt.

Der Aufnahmebehälter 2 weist ein Rührwerk 30' mit Rührarmen 32, 32' und einen entlang eines Abschnitts des Antriebsstabes 26 herum erstreckenden Spiralmischer 48 mit einer Mischwendel 50 auf. Das Rührwerk 30 erzeugt bevorzugt eine entgegen der Schwerkraft gerichtete Umwälzbewegung des Vakuumbetons in der Abführzone 34 des Aufnahmebehälters 2.

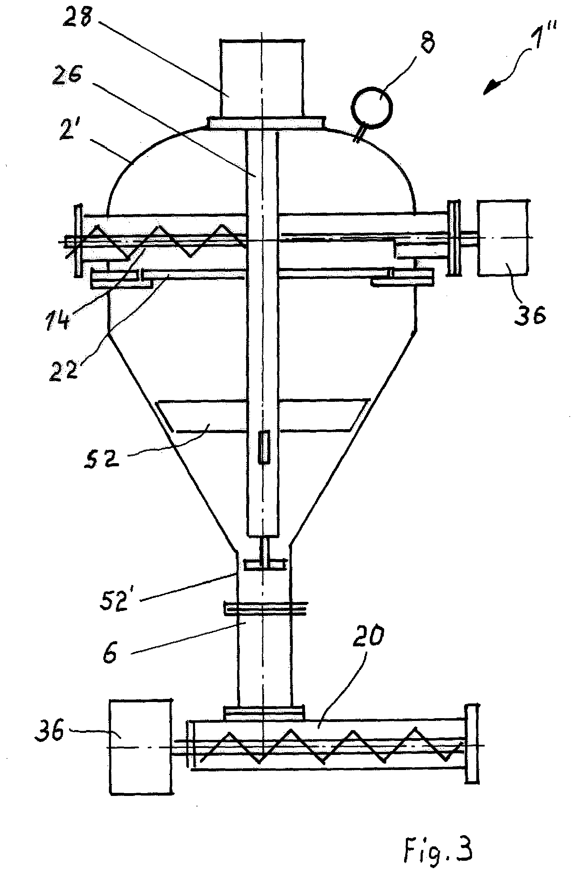

Fig. 3 zeigt eine dritte Ausführungsform einer Vorrichtung 1" zum Behandeln von Frischbeton vor dessen Verarbeitung, die nicht Teil der Erfindung ist. Die Vorrichtung 1" weist einen Aufnahmebehälter 2' auf, der einen Behältereinlass 4 und einen Behälterauslass 6 hat. Mit dem Behältereinlass 4 ist eine erste Fördereinrichtung 14 medienleitend verbunden, mit der der Frischbeton in das Behälterinnere gefördert wird. Am Aufnahmebehälter 2' ist eine Vakuumiereinheit 8 mit wenigstens einer Vakuumpumpe fluidleitend angeschlossen, welche in der Vakuumzone 10 einen Unterdruck erzeugt.

Innerhalb des Behälters ist ein Rührwerk 30" angeordnet, das mehrere Rührarme 52, 52' aufweist, die senkrecht am Antriebsstab 26 abstehen. Das Rührwerk 30" wirkt einer Entmischung des Vakuumbetons in der Abführzone 34 im Aufnahmebehälter 2' entgegen. Die in Fig. 3 gezeigte Vorrichtung zum Behandeln von Frischbeton kann beispielsweise Teil einer Betonverarbeitungs-Anlage 42 (Fig. 1) oder Teil eines nicht näher dargestellten Beton-Straßenfertigers sein.

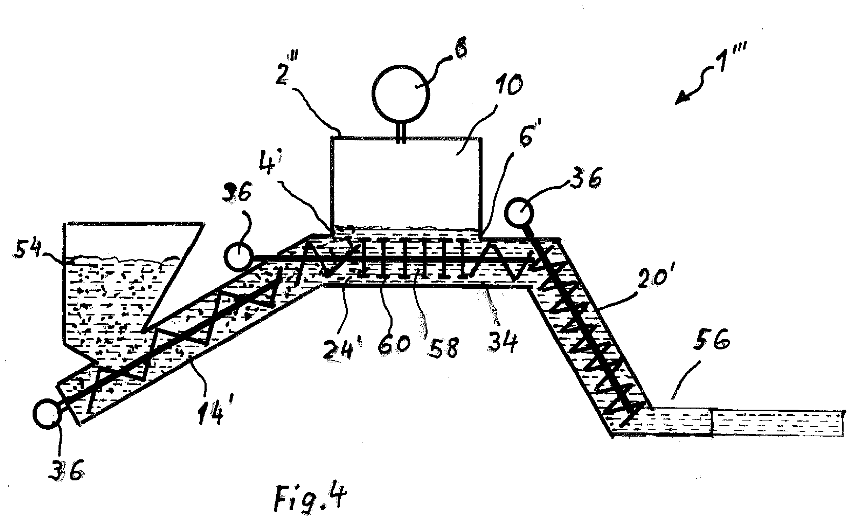

Fig. 4 zeigt eine alternative Ausführungsform einer Behandlungsvorrichtung 1‴, die nicht Teil der Erfindung ist, welche einen Aufnahmebehälter 2" umfasst, der einen Behältereinlass 4' und einen Behälterauslass 6' hat. Mit dem Behältereinlass 4' ist eine erste Fördereinrichtung 14' gekoppelt, welche Frischbeton von einem Aufgabebehälter 54 für Frischbeton in Richtung des Behältereinlass 4` fördert. Mit dem Behälterauslass 6' ist eine zweite Fördereinrichtung 20' medienleitend verbunden, welche den erzeugten Vakuumbeton in Richtung eines horizontal ausgerichteten Auslassbereiches 56 transportiert.

Zudem weist die Vorrichtung 1‴ eine weitere Fördereinrichtung 24' auf, welche so im Aufnahmebehälter 2" angeordnet ist, dass sie sich vom Behältereinlass 4' bis zum Behälterauslass 6' erstreckt. Mittels der Fördereinrichtung 24' wird der zu behandelnde Beton zwischen dem Einlass 4' und dem Auslass 6' gefördert. Zudem erfolgt während des Fördern des Frischbetons ein Umwälzen des Betons mittels einer an der Fördereinrichtung 24` angeordneten Umwälzeinrichtung 58, mittels der Teilmengen des Betons in Richtung der Oberfläche des Frischbetons im Aufnahmebehälter bewegt werden. Innerhalb des Aufnahmebehälters 2" wird oberhalb der Förderstrecke mittels einer Vakuumiereinheit 8 ein Vakuum erzeugt, über das im Frischbeton enthaltene Lufteinschlüsse herausgelöst und so Vakuumbeton hergestellt wird.

Die Fördereinrichtung 24' weist zur Ausbildung der Umwälzeinrichtung 58 entlang eines Abschnitts Umwälzpaddel 60 auf, die keine Förderbewegung umsetzen. Wie aus Fig. 4 ersichtlich, weisen die Fördereinrichtungen 14', 20', 24` unterschiedliche Steigungen bzw. Abschnitte mit unterschiedlichen Steigungen auf. Als Fördereinrichtungen werden hier bevorzugt Schneckenförderer eingesetzt. Als Fördereinrichtungen können jedoch auch Pumpen verwendet werden. Gleiche Bauteile sind mit denselben Bezugszahlen bezeichnet.

### Bezugszeichenliste

- 1, 1', 1", 1‴: Vorrichtung
- 2, 2', 2": Aufnahmebehälter
- 4, 4': Behältereinlass
- 6, 6`: Behälterauslass
- 8: Vakuumiereinheit
- 10: Vakuumzone
- 12: Verteileinrichtung
- 14, 14': Erste Fördereinrichtung
- 16: Förderleitung
- 18: Frischbetonbunker
- 20, 20': Zweite Fördereinrichtung
- 22: Ausbreitteller
- 24, 24': Fördereinrichtung
- 26: Antriebsstab
- 28: Antriebsmittel
- 30, 30', 30": Rührwerk
- 32, 32`, 52, 52`: Rührarm
- 34: Abführzone
- 36: Antriebsmittel
- 38: Abführleitung
- 40, 40': Form
- 42, 42': Betonverarbeitungs-Anlage
- 44, 44': Paddel
- 46: Schnecke
- 48: Spiralmischer
- 50: Mischwendel
- 54: Aufgabebehälter
- 56: Auslassbereich
- 58: Umwälzeinrichtung
- 60: Umwälzpaddel

## Patentansprüche

1. Vorrichtung zum Behandeln von Frischbeton vor dessen Verarbeitung, aufweisend einen Aufnahmebehälter (2) für den Frischbeton mit einem Behältereinlass (4) und einem Behälterauslass (6), wenigstens eine mit dem Behälter (2) fluidleitend verbundene Vakuumiereinheit (8) zum Erzeugen eines unterhalb des atmosphärischen Umgebungsdruckes liegenden Innendruckes in zumindest einer Vakuumzone (10) des Behälters (2) und mindestens eine in der oder angrenzend an die Vakuumzone (10) des Behälters (2) angeordnete Verteileinrichtung (12) für den zu behandelnden Frischbeton, wobei die Verteileinrichtung (12) einen Ausbreitteller (22) für den in den Aufnahmebehälter (2) eingeleiteten Frischbeton umfasst, wobei der Ausbreitteller (22) drehbar im Aufnahmebehälter (2) ist, **dadurch gekennzeichnet, dass** dem drehbaren Ausbreitteller (22) ein Abstreifer zugeordnet ist, welcher dazu eingerichtet ist, bevorzugt kontinuierlich eine Teilmenge des auf dem Ausbreitteller (22) befindlichen, teilweise von Lufteinschlüssen befreiten, Vakuumbetons in die Abführzone (34) abzuführen.

2. Vorrichtung nach Anspruch 1, **gekennzeichnet durch** eine mit dem Behältereinlass (4) medienleitend verbundene erste Fördereinrichtung (14) und eine mit dem Behälterauslass (6) medienleitend verbundene zweite Fördereinrichtung (20).

3. Vorrichtung nach Anspruch 2,
**dadurch gekennzeichnet, dass** die erste Fördereinrichtung (14) einlassseitig mit einem Betonbehälter (18) für den Frischbeton, vorzugsweise einem Frischbetonbunker (18), oder einem Fülltrichter einer Betonverarbeitungs-Anlage (42') fluidleitend gekoppelt ist.

4. Vorrichtung nach einem der Ansprüche 2 und 3,
**dadurch gekennzeichnet, dass** die zweite Fördereinrichtung (20) einen bevorzugt horizontal oder vertikal angeordneten Auslassbereich (56), vorzugsweise eine Abführleitung (38), aufweist.

5. Vorrichtung nach mindestens einem der Ansprüche 2 bis 4,
**dadurch gekennzeichnet, dass** die erste (14) und zweite Fördereinrichtung (20) einen oder mehrere Schneckenförderer zum Fördern des Frischbetons umfasst.

6. Vorrichtung nach mindestens einem der Ansprüche 1 bis 5,
**dadurch gekennzeichnet, dass** der Aufnahmebehälter (2) eine senkrechte Längsachse und eine vorzugsweise zylindrische Außenwand aufweist, wobei innerhalb des Behälters (2) übereinander eine Vakuumzone (10) und eine Abführzone (34) für den im Aufnahmebehälter (2) zu behandelnden Frischbeton vorgesehen sind.

7. Vorrichtung nach mindestens einem der Ansprüche 1 bis 6,
**dadurch gekennzeichnet, dass** die Vakuumiereinheit (12) wenigstens eine Vakuumpumpe aufweist.

8. Vorrichtung nach mindestens einem der Ansprüche 1 bis 7,
**dadurch gekennzeichnet, dass** im Aufnahmebehälter (2) eine Mischeinrichtung mit vorzugsweise einem Rührwerk (30') zum Mischen des Vakuumbetons in der Abführzone (34) angeordnet ist.

9. Vorrichtung nach Anspruch 8,
**dadurch gekennzeichnet, dass** das Rührwerk (30') mehrere Rührarme (32,32'), welche vorzugsweise unter einem Winkel geneigt zur Rotationsachse verlaufen, und/oder einen Spiralmischer (48) mit einer oder mehreren Mischwendeln (50) aufweist.

10. Betonverarbeitungs-Anlage für Frischbeton, mit
einem Fülltrichter für den darin hineinzugebenden Frischbeton, und
einer Verarbeitungsmaschine für den Frischbeton, **gekennzeichnet durch** wenigstens eine Vorrichtung (1') gemäß den Ansprüchen 1 bis 9, wobei die Vorrichtung (1') vorzugsweise, bezogen auf die Förderrichtung des Frischbetons, zwischen dem Fülltrichter und der Verarbeitungsmaschine angeordnet ist.

11. Verfahren zum Behandeln von Frischbeton, umfassend die Schritte:
- Eingeben von Frischbeton in einen Aufnahmebehälter (2)
- Erzeugen bzw. Aufrechterhalten eines unterhalb des atmosphärischen Umgebungsdruckes liegenden Innendruckes in mindestens einer Vakuumzone (10) des Behälters (2);
- Verteilen des Frischbetons mit einem Ausbreitteller (22), der drehbar im Aufnahmebehälter (2) ist, in der oder angrenzend an die Vakuumzone (10) des Behälters (2), derart, dass die Oberfläche des Frischbetons vergrößert oder Teilmengen in Richtung der Oberfläche des Frischbetons im Aufnahmebehälter (2) bewegt werden;
- Überführen des wenigstens von Lufteinschlüssen teilweise befreiten Vakuumbetons in eine Abführzone (34) des Behälters (2) und
- Abführen des Vakuumbetons aus dem Behälter (2), **dadurch gekennzeichnet, dass** das Überführen des Vakuumbetons mittels einem dem drehbaren Ausbreitteller (22) zugeordneten Abstreifer durchgeführt ist.

12. Verfahren nach Anspruch 11, umfassend zumindest einen, mehrere oder sämtliche der nachfolgend angeführten Schritte:
- Kontinuierliches Eingeben des Frischbetons in den Behälter (2) mittels einer den Behältereinlass (4) bevorzugt abdichtenden Fördereinrichtung (14,20);
- Verteilen des Frischbetons in der Vakuumzone (10) unter Erzeugung einer vorbestimmten Schichtdicke auf einer Verteileinrichtung (12) im Behälter (2) und/oder fortwährendes Überführen von Teilmengen des teilweise von Lufteinschlüssen befreiten Vakuumbetons aus der Vakuumzone (10) in eine Verdichtungszone;
- Mischen des Vakuumbetons in der Abführzone (34) des Behälters (2), vorzugsweise mittels eines Rührwerks (30');
- Kontinuierliches Abführen des Vakuumbetons mittels einer als Dosiereinheit arbeitenden Fördereinrichtung (14,20) am Behälterauslass (6).

13. Verfahren zum Herstellen eines aus Betonwerkstoff herzustellenden Gegenstandes, insbesondere eines Betonfertigteiles, mit den Schritten,
- Erzeugen oder Bereitstellen von Frischbeton;
- Behandeln des Frischbetons nach einem Verfahren gemäß Anspruch 11 oder 12 und Erzeugen von Vakuumbeton;
- Einbringen des Vakuumbetons in eine Form, wobei der Vakuumbeton mittels einer Zuführleitung derart in das Formteil eingebracht wird, dass der Auslass der Zuführleitung während des Befüllens der Form unterhalb des Füllstandes des Betons in der Form gehalten wird.

## Claims

1. Device for the treatment of fresh concrete prior to its processing, comprising a receiving container (2) for the fresh concrete with a container inlet (4) and a container outlet (6), at least one vacuum generating unit (8) fluidically connected to the container (2) for generating an internal pressure below the atmospheric ambient pressure in at least one vacuum zone (10) of the container (2) and at least one distribution device located in or adjacent to the vacuum zone (10) of the container (2) for the fresh concrete to be treated, whereby the distribution device (12) comprises a spreading plate (22) for the fresh concrete filled into the receiving container (2), whereby the spreading plate (22) which is rotatable in the receiving container (2) is **characterised in that** a scraper is assigned to the rotatable spreading plate (22), which is set up to discharge, preferably continuously, a partial quantity of the vacuum concrete on the spreading plate (22) which is partially freed from air voids into the discharge zone (34).

2. Device according to claim 1, **characterised by** a first conveying device (4) connected to the container inlet (14) in a media-conducting manner and a second conveying device (20) connected to the container outlet (6) in a media-conducting manner.

3. Device according to claim 2, **characterised in that** the first conveying device (14) is fluidically coupled on the inlet side to a container (18) for the fresh concrete, preferably a fresh concrete bunker (18), or a hopper of a concrete processing system (42').

4. Device according to one of the claims 2 and 3, **characterised in that** the second conveying device (20) has a preferably horizontally or vertically arranged discharge area (56), preferably a discharge hose (38).

5. Device according to at least one of claims 2 to 4 **characterised in that** the first (14) and second conveying device (20), comprise one or several screw conveyors for conveying the fresh concrete.

6. Device according to at least one of claims 1 to 5, **characterised in that** the receiving container (2) has a vertical longitudinal axis and a preferably cylindrical outer wall, whereby a vacuum zone (10) and a discharge zone (34) for the fresh concrete to be treated in the receiving container (2) are provided for one above the other inside the container (2).

7. Device according to at least one of claims 1 to 6, **characterised in that** the vacuum generating unit (12) comprises at least one vacuum pump.

8. Device according to at least one of claims 1 to 7, **characterised in that** a mixing device with preferably an agitator (30') for mixing the vacuum concrete in the discharge zone (34) is arranged in the receiving container (2).

9. Device according to claim 8, **characterised in that** the agitator (30') comprises more than one agitator arms (32, 32'), which preferably run at an angle inclined to the axis of rotation, and/or a spiral mixer (48) with one or more mixing helixes (50).

10. Concrete processing system for fresh concrete, comprising a hopper for the fresh concrete to be fed into the system, and a processing machine for the fresh concrete, **characterised by** at least one device (1') according to claims 1 to 9, whereby the device (1') is preferably arranged between the hopper and the processing machine in relation to the conveying direction of the fresh concrete.

11. Method for treating fresh concrete, comprising the steps:
- filling of fresh concrete into a receiving container (2);
- generating or maintaining an internal pressure below the atmospheric ambient pressure in at least one vacuum zone (10) of the container (2);
- distribution of the fresh concrete with a spreading plate (22), which is rotatable in the receiving container (2), in or adjacent to the vacuum zone (10) of the container (2), in such a way that the surface of the fresh concrete is increased or partial quantities are moved towards the surface of the fresh concrete in the receiving container (2);
- transfer of the vacuum concrete at least partially freed from air voids into a discharge zone (34) of the container (2), and
- discharge of the vacuum concrete from the container (2), **characterised in that** the transferring of the vacuum concrete is carried out by means of a scraper attributed with the rotatable spreading plate (22).

12. Method according to claim 11, comprising at least one, more or all of the following steps:
- continuous filling of the fresh concrete into the container (2) by means of a conveying device (14, 20) preferably sealing off the container inlet (4);
- distribution of the fresh concrete in the vacuum zone (10) while producing a predetermined layer thickness on a distribution device (12) in the container (2) and/or continuously transferring partial quantities of the vacuum concrete partially freed from air voids from the vacuum zone (10) into a compaction zone;
- mixing of the vacuum concrete in the discharge zone (34) of the container (2) preferably by means of an agitator (30);
- continuous discharge of the vacuum concrete by means of a conveying device (14, 20) operating as a metering unit at the container outlet (6).

13. Method for manufacturing an object to be made of concrete material, in particular a precast concrete part, comprising the steps,
- production or providing of fresh concrete;
- treatment of the fresh concrete using a method according to claim 11 or 12 and producing vacuum concrete;
- filling of the vacuum concrete into a mould, wherein the vacuum concrete is filled into the mould by means of a supply line in such a way that the outlet of the supply line remains below the filling level of the concrete in the mould during filling.

## Revendications

1. Dispositif pour le traitement du béton frais avant son façonnage, comportant une cuve réceptrice (2) pour le béton frais, celle-ci dotée d'un orifice d'entrée (4) et d'un orifice de sortie (6), au moins une unité de dépression (8) reliée fluidiquement à la cuve (2) afin de générer une pression interne inférieure à la pression atmosphérique ambiante dans au moins une zone de dépression (10) de la cuve (2), et au moins un dispositif répartiteur (12) pour le béton frais à traiter, disposé dans la zone de dépression (10) de la cuve (2) ou adjacent à ladite zone, étant entendu que le dispositif répartiteur (12) comporte une plaque d'étalement (22) pour le béton frais acheminé dans la cuve réceptrice (2) et que la plaque d'étalement (22) est rotative dans la cuve réceptrice (2), **caractérisé en ce que** la plaque d'étalement (22) rotative est équipée d'un racleur conçu pour transporter dans la zone d'évacuation (34), de préférence en continu, une quantité partielle de béton sous vide se trouvant sur la plaque d'étalement (22) et partiellement libéré d'inclusions d'air.

2. Dispositif selon la revendication 1, **caractérisé par** un premier convoyeur (14) relié fluidiquement à l'orifice d'entrée (4) et un deuxième convoyeur (20) relié fluidiquement à l'orifice de sortie (6).

3. Dispositif selon la revendication 2, **caractérisé en ce que** le premier convoyeur (14) est relié fluidiquement du côté entrée à un réservoir (18) à béton frais, de préférence à un bunker à béton frais (18) ou à une trémie de remplissage d'une installation de façonnage de béton (42').

4. Dispositif selon l'une des revendications 2 et 3, **caractérisé en ce que** le deuxième convoyeur (20) comporte une zone de sortie (56), de préférence un conduit d'évacuation (38), disposée de préférence horizontalement ou verticalement.

5. Dispositif selon au moins l'une des revendications 2 à 4, **caractérisé en ce que** le premier (14) et le deuxième convoyeur (20) comportent un ou plusieurs convoyeurs à vis pour transporter le béton frais.

6. Dispositif selon au moins l'une des revendications 1 à 5, **caractérisé en ce que** la cuve réceptrice (2) comporte un axe longitudinal vertical et une paroi extérieure de préférence cylindrique, étant entendu qu'une zone de dépression (10) et une zone d'évacuation (34) pour le béton frais à traiter dans la cuve réceptrice (2) sont prévues l'une au-dessus de l'autre à l'intérieur de la cuve (2).

7. Dispositif selon au moins l'une des revendications 1 à 6, **caractérisé en ce que** l'unité de dépression (12) comporte au moins une pompe à vide.

8. Dispositif selon au moins l'une des revendications 1 à 7, **caractérisé en ce qu'**un dispositif de mélange, doté de préférence d'un agitateur (30'), est installé dans la cuve réceptrice (2) afin de mélanger le béton sous vide dans la zone d'évacuation (34).

9. Dispositif selon la revendication 8, **caractérisé en ce que** l'agitateur (30') comporte plusieurs pales d'agitation (32, 32'), lesquelles sont de préférence sous un angle incliné par rapport à l'axe de rotation, et/ou un mélangeur en spirale (48) doté d'une ou de plusieurs hélices de mélange (50).

10. Installation de façonnage de béton frais, avec une trémie de remplissage servant à introduire le béton frais et avec une machine de façonnage pour le béton frais, **caractérisée par** au moins un dispositif (1') selon les revendications 1 à 9, étant entendu que le dispositif (1') est de préférence disposé, par rapport à la direction de convoyage du béton frais, entre la trémie de remplissage et la machine de façonnage.

11. Procédé pour le traitement de béton frais, comportant les étapes suivantes :
- Introduction de béton frais dans une cuve réceptrice (2) ;
- Création et maintien d'une pression interne inférieure à la pression atmosphérique ambiante dans au moins une zone de dépression (10) de la cuve (2) ;
- Répartition du béton frais avec une plaque d'étalement (22) qui est rotative dans la cuve réceptrice (2), ceci dans la zone de dépression (10) de la cuve (2) ou adjacente à ladite zone, de telle sorte à ce que la surface du béton frais soit augmentée ou à ce que des quantités partielles soient déplacées en direction de la surface du béton frais dans la cuve réceptrice (2) ;
- Transfert du béton sous vide, au moins partiellement libéré d'inclusions d'air, dans une zone d'évacuation (34) de la cuve (2) ;
et
- Évacuation du béton sous vide hors de la cuve (2), **caractérisée en ce que** le transfert du béton sous vide est effectué au moyen d'un racleur associé à la plaque d'étalement rotative (22).

12. Procédé selon la revendication 11, comportant au moins une, plusieurs ou toutes les étapes indiquées ci-après :
- Introduction en continu de béton frais dans la cuve (2) au moyen d'un convoyeur (14, 20), assurant de préférence l'étanchéité de l'orifice d'entrée (4) ;
- Répartition du béton frais dans la zone de dépression (10) en produisant une épaisseur de couche prédéfinie sur un dispositif répartiteur (12) dans la cuve (2) et/ou transfert continu de quantités partielles de béton sous vide et partiellement libéré d'inclusions d'air, hors de la zone de dépression (10) dans une zone de compactage ;
- Mélange du béton sous vide dans la zone d'évacuation (34) de la cuve (2), de préférence au moyen d'un agitateur (30') ;
- Évacuation continue du béton sous vide au moyen d'un convoyeur (14, 20) fonctionnant comme unité de dosage à l'orifice de sortie (6).

13. Procédé pour la fabrication d'un objet fait à partir de béton, en particulier d'un élément préfabriqué en béton, comprenant les étapes suivantes :
- Production ou fourniture de béton frais ;
- Traitement du béton frais selon un procédé conforme à la revendication 11 ou 12 et production de béton sous vide ;
- Introduction de béton sous vide dans un moule, le béton sous vide étant introduit dans le moule au moyen d'un conduit d'alimentation de telle sorte que la sortie du conduit d'alimentation soit maintenue en dessous du niveau de remplissage du béton dans le moule durant le remplissage du moule.
